# EUROPEAN PATENT SPECIFICATION

(11) **EP 2 746 601 B1**
(45) Date of publication and mention of the grant of the patent: **09.03.2016**
(21) Application number: 12197671.6
(22) Date of filing: 18.12.2012
(51) Int. Cl.: F16C 1/26

(54) **Actuating cable for cycle**
Zyklusbetätigungskabel
Câble d'actionnement pour cycle

(43) Date of publication of application: 25.06.2014
(73) Proprietor: Lin, Chang Hui, Province of China (TW)
(72) Inventor: Lin, Chang Hui, Province of China (TW)
(74) Representative: Cabinet Chaillot

(56) References cited:
- DE-U1- 9 415 503
- JP-A- 2002 039 152
- US-A- 3 177 901
- US-A- 3 192 795

## Description

The invention relates to an actuating or operative or pulling cable for a bicycle, tricycle, motor cycle, unicycle, etc. adjustable to different arrangement or strength or flexibility or stiffness.

Typical cycles, bicycles, tricycles, motor cycles, unicycles, each comprise one or more brake devices or transmission devices to be actuated with actuating or operative or pulling cables.

However, the typical pulling cables include a single inner wire engaged in the outer sheath and may not be adjusted to different arrangement or strength or flexibility or stiffness.

US 3,177,901 A and US 3,192,795 A disclose an actuating cable according to the preamble portion of claim 1. A helical roving is wound around the longitudinal members. JP 2002-39152 A discloses a similar structure.

The invention is to provide an actuating cable adjustable to different arrangement or strength or flexibility or stiffness for actuating the brake devices or the transmission devices of the cycle. In particular, the invention provides an actuating cable as defined in the claims.
Fig. 1 is a perspective view of an actuating cable; and

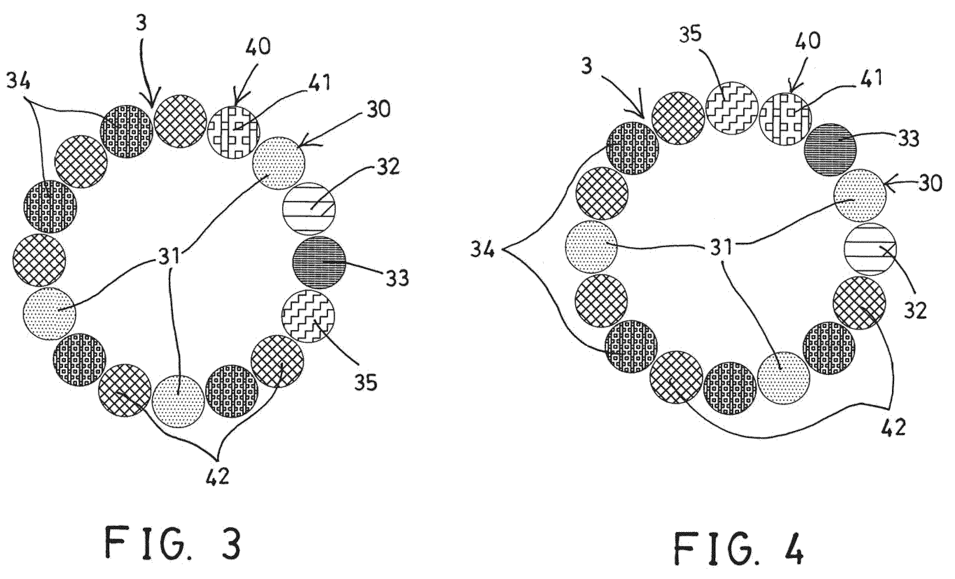

Figs. 2, 3, 4 are cross sectional views of the actuating cable.

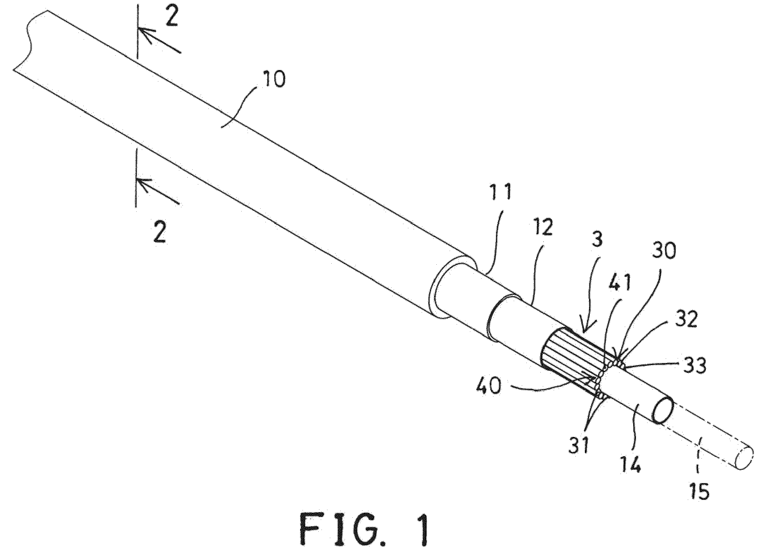

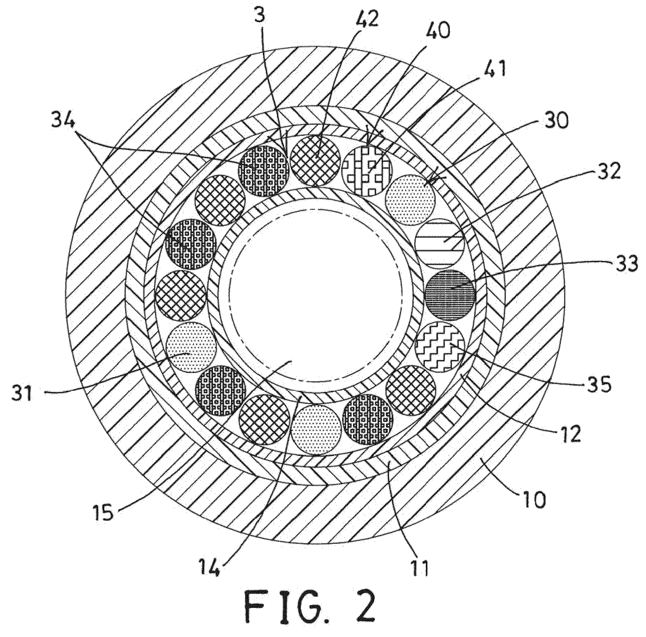

Referring to Figs. 1-2, an actuating cable comprises an outer sheath 10, a reinforcing tube 11 engaged in the sheath 10, a tubular cushion 12 engaged in the tube 11, a number of longitudinal members 3, e.g. ropes, engaged in the cushion 12, an inner lubricating bushing 14 engaged in the longitudinal members 3 which are engaged between the cushion 12 and the bushing 14, and an inner wire 15 engaged in the bushing 14.

The longitudinal members 3 may selected from metal elements 30, steel elements 31, iron elements 32, aluminum elements 33, magnesium and aluminum alloy elements 34, titanic alloy elements 35, ..., and a number of non-metal elements 40, such as glass or carbon fiber elements 41, plastic elements 42, ..., and the metal elements 30 and the non-metal elements 40 may be adjusted or rearranged in different arrangements or structures for adjusting the arrangement or strength or flexibility or stiffness of the actuating cable, and for preventing the actuating cable from being bent or twisted or distorted unpredictably and for actuating the brake devices or the transmission devices of the cycle.

The longitudinal members 3 may have a circurlar cross section as shown or a cross section of different shape. They are arranged e.g. on a circle around the inner bushing 14 or in a substantially annular pattern or loop.
Neighbouring longitudinal members may contact each other. When viewed in cross section the longitudinal members may form a closed loop or ring. Metal and non-metal elements may be arranged in alternating order.

## Claims

1. An actuating cable comprising:
an outer sheath (10),
an inner bushing (14), and
a plurality of longitudinal members (3) between the outer sheath (10) and the inner bushing (14), including at least one metal element (30) and at least one non-metal element (40) arranged in different positions,
**characterised in that**
a reinforcing tube (11) is engaged in the outer sheath (10); and
a tubular cushion (12) is engaged in the reinforcing tube (11), wherein
the plurality of longitudinal members (3) is engaged between the cushion (12) and the inner bushing (14).

2. An actuating cable as claimed in claim 1, wherein the metal element (30) is made of iron, aluminum, a magnesium and aluminum alloy, and/or a titanic alloy.

3. An actuating cable as claimed in claim 1 or 2, wherein the non-metal element (40) is a fiber element or a plastic element.

4. An actuating cable as claimed in claim 3, wherein the fiber element is a glass fiber element or a carbon fiber element.

## Patentansprüche

1. Betätigungszug, umfassend:
eine Außenhülle (10),
eine Innenhülse (14) und
eine Vielzahl von Längselementen (3) zwischen der Außenhülle (10) und der Innenhülse (14), die mindestens ein metallisches Element (30) und mindestens ein nichtmetallisches Element (40) aufweisen, die in unterschiedlichen Positionen angeordnet sind,
**dadurch gekennzeichnet, dass**
ein Verstärkungsschlauch (11) in der Außenhülle (10) eingepasst ist; und
ein röhrenförmiger Dämpfer (12) in dem Verstärkungsschlauch (11) eingepasst ist, wobei
die Vielzahl von Längselementen (3) zwischen dem Dämpfer (12) und der Innenhülse (14) eingepasst ist.

2. Betätigungszug nach Anspruch 1, wobei das metallische Element (30) aus Eisen, Aluminium, einer Magnesium- und Aluminiumlegierung und/oder einer Titanlegierung gefertigt ist.

3. Betätigungszug nach Anspruch 1 oder 2, wobei das nichtmetallische Element (40) ein Faserelement oder ein Kunststoffelement ist.

4. Betätigungszug nach Anspruch 3, wobei das Faserelement ein Glasfaserelement oder ein Kohlenstofffaserelement ist.

## Revendications

1. Câble d'actionnement comprenant :
une gaine externe (10),
un fourreau interne (14), et
une pluralité d'éléments longitudinaux (3) entre la gaine externe (10) et le fourreau interne (14), comprenant au moins un élément métallique (30) et au moins un élément non-métallique (40) disposés dans différentes positions,
**caractérisé par le fait que** :
un tube de renforcement (11) est engagé dans la gaine externe (10) ; et
un coussin tubulaire (12) est engagé dans le tube de renforcement (11), la pluralité d'éléments longitudinaux (3) étant engagés entre le coussin (12) et le fourreau interne (14).

2. Câble d'actionnement selon la revendication 1, dans lequel l'élément métallique (30) est fait de fer, d'aluminium, d'un alliage de magnésium et d'aluminium, et/ou d'un alliage de titane.

3. Câble d'actionnement selon la revendication 1 ou 2, dans lequel l'élément non-métallique (40) est un élément de fibre ou un élément en matière plastique.

4. Câble d'actionnement selon la revendication 3, dans lequel l'élément de fibre est un élément de fibre de verre ou un élément de fibre de carbone.
